# EUROPÄISCHE PATENTSCHRIFT

(11) **EP 0 855 954 B1**
(45) Veröffentlichungstag und Bekanntmachung des Hinweises auf die Patenterteilung: **19.01.2000**
(21) Anmeldenummer: 96934764.0
(22) Anmeldetag: 21.10.1996
(51) Int. Cl.: B29C 47/42, B29C 47/50, B29C 47/74

(54) **EXTRUDER FÜR KUNSTSTOFFE**
EXTRUDER FOR PLASTICS
EXTRUDEUSE POUR MATIERES PLASTIQUES

(30) Priorität: 21.10.1995 DE 19539203
(43) Veröffentlichungstag der Anmeldung: 05.08.1998
(73) Patentinhaber: Gefinex-Jackon GMBH, 33803 Steinhagen (DE)
(72) Erfinder: KOLOSSOW, Klaus, Dieter, D-29313 Hambühren (DE)
(74) Vertreter: Kaewert, Klaus
(86) Internationale Anmeldenummer: EP9604556
(87) Internationale Veröffentlichungsnummer: WO9715433

(56) Entgegenhaltungen:
- EP-A- 0 244 591
- DE-A- 2 905 717
- DE-C- 4 231 232
- FR-A- 2 496 002
- GB-A- 864 916
- GB-A- 1 219 946
- GB-A- 2 085 352
- GB-A- 2 148 781
- US-A- 3 868 093

## Beschreibung

Die Erfindung betrifft einen Extruder, insbesondere zum Schaumextrudieren von Kunststoffen, auch zum Einmischen von Additiven und Treibmitteln, vorzugsweise unter Zufuhrung von höher- oder niedrigviskosen Polymeren über einen Seitenarmextruder, sowie Abkühlung auf Ausformtemperatur und Zuführung in ein formgebendes Werkzeug, wobei zwischen mindestens zwei Stufen oder Zonen eine Pumpe geschaltet ist.

Das Extrudieren geschäumter Kunststoffe hat zunehmende Bedeutung gewonnen. Dementsprechend ist eine umfangreiche Entwicklung zu verzeichnen. Es sind diverse Extruderbauformen entstanden. Dazu gehören die Einschneckenextruder, Zweischneckenextruder und auch die Planetwalzenextruder. Die Rohstoffbasis für das Extrudieren ist vielfältiger geworden. Neben dem Rohstoff sind auch Additive und Treibmittel von Bedeutung. Im Bereich der Treibmittel hat sich die Fachwelt zunächst den Fluorkohlenwasserstoffen zugewandt. Diese Treibmittel führen auch unter schwierigen Rahmenbedingungen zu guten Schäumergebnissen. Leider mußten diese Treibmittel wieder aufgegeben werden, weil von Ihnen eine sehr starke Umweltgefahr ausgeht. Die alternativ zur Verfügung stehenden Treibmittel sind alle deutlich schwieriger.

Vor obigem Hintergrund erhält die Aufteilung des Extrusionsvorganges in verschiedene Zonen und Stufen eine immer größere Bedeutung, weil in den einzelnen Zonen gezielt auf den Einsatzstoff eingewirkt werden kann. Es ist seit langem bekannt, folgende Zonen zu unterscheiden:
* Einziehen/Füllen
* Fördern/Kompremieren
* Entgasung
* Einmischen von flüssigen und festen Additiven sowie von anderen Polymeren
* Einmischen von Treibmitteln
* Homogenisieren
* Plastifizieren
* Abkühlen
* Austragen

Diese Zonen können sich insgesamt oder teilweise an einem einzigen Extruder finden. Die Zonen können aber auch auf mehrere Extruder verteilt sein. Dann wird häufig von mehrstufigen Extrusionsanlagen gesprochen. Eine typische Form der mehrstufigen Extrusion ist die sogenannte Extrusion in Kaskaden. Dabei arbeiten z.B. zwei Extruder in der Form zusammen, daß der eine seine Schmelze in den anderen Extruder aufgibt.

Obiger Mehrstufigkeitsbegriff ist von den mehrstufigen Herstellungsverfahren zu trennen. Von letzterem wird insbesondere beim Herstellen vernetzter Kunststoffe, auch Kunststoffschäume gesprochen.

Je länger die Schnecke wird, desto mehr Reibungsarbeit ist zu überwinden. Um die Reibung zu überwinden, muß immer mehr Energie zugeführt werden. Zugleich dürfen Grenztemperaturen nicht überschritten werden. Das erzwingt eine intensive Kühlung verschiedener Extruderzonen. Abgesehen von dem dadurch bedingten baulichen und betrieblichen Aufwand führt das zu einem extremen Energieaufwand, der im Wege der Kühlung wieder vernichtet wird.

Der Erfindung liegt die Aufgabe zugrunde, den Aufwand für das Extrudieren zu verringern. Dabei greift die Erfindung einen älteren Lösungsvorschlag auf, der vorsieht, zwischen mindestens zwei Stufen eine Pumpe anzuordnen wie zum Beispiel in der EP-A-0 244 591 beschrieben. Der Vorschlag hat den sehr positiven Ansatz, den notwendigen Druckaufbau zum Mischen, Homogenisieren usw. mittels der zwischengeschalteten Pumpe darzustellen. Die Pumpe soll den Druckaufbau dort leisten, wo er gebraucht wird, so daß die Schnecken von der Arbeit des Druckaufbaus ganz oder teilweise entlastet werden und ihre Tätigkeit sich auf die jeweils gewünschte Funktion, z.B. das Homogenisieren, beschränken können. Der Lösungsvorschlag hat sich bisher jedoch in der Praxis nicht durchsetzen können.

Die Erfindung sieht die Möglichkeit, obigem Lösungsvorschlag durch Verwendung von Planetwalzenextruderabschnitten zum Durchbruch zu verhelfen. Nach der Erfindung ist deshalb von zwei durch die Pumpe verbundenen Zonen/Stufen mindestens eine als Planetwalzenextruderabschnitt ausgebildet. Der Planetwalzenextruder zeichnet sich gegenüber allen anderen Extrudern durch eine höhere spezifische Misch- und Homogenisierleistung und im Falle der Kühlung durch eine höhere spezifische Kühlleistung aus. Dafür ist der Planetwalzenextruder aber von Hause aus weniger für einen Druckaufbau geeignet. Das ist darauf zurückzuführen, daß zwischen den auf der Zentralspindel umlaufenden Planetenspindeln ein erheblicher Hohlraum besteht.

Nach der Erfindung wirkt sich das nicht nachteilig aus, weil die Pumpe je nach Auslegung in der Lage ist, jeden gewünschten Druck darzustellen. Das gilt vor allem für Zahnradpumpen.

Die Erfindung kehrt den Nachteil der Planetenspindeln in einen Vorteil um, indem sie unter weiterer Reduzierung der Förderwirkung im Planetwalzenextruder mit Hilfe der Pumpe eine optimale Verweilzeit in dem Extruder einstellen kann. Auch das Anlaufen des Extruders wird mit Hilfe der Pumpe erleichtert, weil die Pumpe erst nach Erreichen eines optimalen Füllungsgrades im Extruder und optimaler Verweilzeit das Einsatzmaterial weiterfördert. Die Reduzierung der Förderwirkung kann bewirkt werden durch:
- Wahl einer geringeren Planetenspindelzahl,
- Wahl einer anderen Planetenspindelanordnung auf dem Teilkreisdurchmesser der Innenverzahnung, d.h. Verschiebung zur Erzeugung größeren Abstandes zwischen den Spindeln einzelner Planetenspindelpaare
- Wahl anderer Verzahnung
- Wahl einer anderen Spindelsteigung ggfs. bis zur Gegenläufigkeit

In weiterer Ausbildung der Erfindung sind die Plastifizier- bzw. Aufschmelz- und Mischzone und/oder die Verweil-, Misch- und Kühlzone und/oder die Misch- und Kühlzone mit einem Planetwalzenextruderabschnitt versehen. In diesen Bereichen ist die Einstellung einer optimalen Verweilzeit von besonderem Vorteil. Entsprechendes gilt für die Verwendung von Planetwalzenextruderabschnitten für eine vorgeschaltete Einzugzone bzw. Füllzone und/oder für eine nachgeschaltete Austragzone.

Besonders günstige Verhältnisse ergeben sich in Anwendung amorphe, kristalline und teilkristalline Thermoplaste. Das sind inbesondere Polystyrol (PS), Polyethylen (PE) oder Polypropylen (PP) oder vergleichbare Kunststoffe, auch Copolymere von PE, PP und PS, bei einstufigem Extruder mit folgender Abschnittsaufteilung:
Abschnitte I und II: Rohstoffzuführung und Einzug (Feststoffgemisch aus mehreren Komponenenten) und Aufschmelzung mittels Einschneckenschaft und genuteter Zylindermantelfläche, die druckkonstant in ein nachfolgendes Planetenteil fördert.
Abschnitt III: Plastifizieren und Homogenisieren des Polymergemisches unter geringster Energieeinleitung bei optimaler Temperaturführung, variable Wahl der Anzahl der Planetenspindeln.
Abschnitt IV: Umlenkung der homogenen Schmelze durch einen Blister auf dem Schneckenschaft in den Schmelzefilter mit Siebwechsler und anschließend in die Zahnradpumpe, die mit minimalem Energieaufwand den nachfolgenden Prozessabschnitt konstant mit Schmelze befüllt.
Abschnitt V: Der Befüllungsgrad und somit die Verweilzeit können unabhängig von der Hauptdrehzahl der Schneckenwelle des Extruders in der Verweil-, Misch- und Kühlzone V, die zugleich eine Druckkammer bildet, gesteuert werden. Hierbei wird neben der Verweilzeit in dem Abschnitt der Vorteil einer Einflußnahme auf das Druckniveau genutzt. Hinzu kommt der Vorteil, durch einen Bypass- oder Seitenarmextruder entweder zusätzlich aufgeschmolzene hochviskose oder niedrigviskose alternative oder andere in Polymere eingebettete Additive dem Hauptschmelzestrom zuzuführen.

Die Vermischung erfolgt in einem Planetwalzenabschnitt, dessen Steigung entgegen der Hauptsteigung ausgebildet ist. Hierdurch ergibt sich eine zusätzliche Steigerung der Mischwirkung und Verweilzeit. Außerdem hebt sich dadurch ein wesentlicher Teil der Krafteinwirkung auf die Mechanik auf.
In dem Abschnitt erfolgt die Eingabe weiterer flüssiger und/oder gasförmiger Treibmittel und/oder Additive.
Das Homogenisieren und Abkühlen erfolgt durch den der Eingabe nachfolgenden Planeten-Teilabschnitt. Hierbei besteht noch der zusätzliche Vorteil in der Verteilung der Planetenspindeln auf dem Umfang.

In diesem Planetenwalzenextruderabschnitt sind die Planetenspindeln des vorderen Planetwalzenextruderabschnittes zu denen des hinteren Planetwalzenextruderabschnittes versetzt angeordnet, wodurch eine Verbesserung des Schmelzestromgemisches sowie der Homogenisierung erreicht wird.

Begrenzt wird der Abschnitt V (Reaktionsraum) durch einen Blister auf dem Schneckenschaft und die Schmelzeumleitung in eine weitere Zahnradpumpe. Die Zahnradpumpe übernimmt die Funktion eines Stellgliedes oder Regelventils und gleichzeitiger Druckerzeugung, um den nachfolgenden Extruderabschnitt zu befüllen und den notwendigen Druck zur Befüllung des formgebenden Werkzeuges unter geringster Energieeinleitung zu bewirken.
Hierbei kann wahlweise in diesem Extruderabschnitt der Durchmesser vergrößert werden, um eine größere Kühloberfläche bereit zu stellen, wobei es jedoch zweckmäßig sein kann , die Anzahl der Planetenspindeln zu reduzieren, um die aus dem größeren Durchmesser zwangsweise resultierende höhere Umfangsgeschwindigkeit (Wärmeerzeugung) zu kompensieren.
Bei der Wahl eines kleineren Durchmessers kann über eine erhöhte Anzahl der Planetenspindeln und die Länge des Abschnittes die Berührung der Schmelze an der Zylinderoberfläche zwecks Wärmeabführung erhöht werden.
Anschließend kann der Schneckenschaft zur Beruhigung des Schmelzestroms als Einschnecke (Pumpzone) ausgebildet werden, wobei über den Durchmesser zusätzlich Einfluß genommen werden kann.
Vorzugsweise ist die Austragschnecke mehrgängig, z.B. 4gängig ausgebildet.

Die Austragszone ist relativ wichtig. Sie entscheidet mit über die Qualität der in das Extrusionswerkzeug gelangenden Schmelze. Nach der Erfindung findet in der Austragszone noch eine besondere Vergleichmäßigung der Schmelze statt. Die Vergleichmäßigung baut auch eine Druckpulsation ab, die von den umlaufenden Planetspindeln des in Förderrichtung der Schmelze letzten Planetwalzenextruderabschnittes ausgeht. Die Druckstöße verlieren an Wirkung, je größer der Abstand zum Extruderaustragende ist. Nach der Erfindung ist der Abstand von dem Extruderaustragende/Werkzeug mindestens 0,1 D, wobei D der Außendurchmesser der Schnecke ist, welche sich an den letzten Planetwalzenextruderabschnitt anschließt.

In dem Sinne kann es von erheblichem Vorteil sein, in die Austragzone einen Igelkopf und/oder ein Schlafrohr zu integrieren. Der Igelkopf entsteht aus einer Schnecke, indem über die z.B. rechtsgänge Schneckengänge noch eine linksgänge gleiche Schnecke gefräst wird. Dadurch verbleiben von der vorhergehenden Schnecke nur noch Teilstücke, die das Bild von Stacheln eines Igels vermitteln. Die Länge des Igelkopfes beträgt nach der Erfindung 0,5 bis 1,5 D, wobei D der Teilkreisdurchmesser der Igel-Ausgangsschnecke ist. Der Igelkopf verursacht noch einmal eine intensive Durchmischung der Schmelze. In dem nachgeordneten Schlafrohr wird die Schmelze wieder beruhigt. Dabei kann das Schlafrohr ein einfaches Rohr ohne Einbauten sein.

Mit allen Einzelheiten kann die Austragzone eine Länge von 1 bis 5 D aufweisen, wobei D der Teilkreisdurchmesser der Zentralspindel/Schnecke in der Austragzone ist.

In der Mischzone (ohne Kühlung) beträgt die Schmelzetemperatur je nach Kunststoff vorzugsweise zwischen 140 und 240 Grad Celsius, in der Anwendung auf Polystyrol etwa 200 Grad Celsius, auf Polyethylen etwa 140 Grad Celsius und auf Polypropylen etwa 240 Grad Celsius. Vor allem bei Copolymeren mit PP können höhere Temperaturen erforderlich werden. Soweit zur Erreichung dieser Temperatur eine Wärmezuführung von außen erforderlich ist, erfolgt das mittels einer Beheizung des Extrudermantels. Die Beheizung kann z.B. mit heißem Druckwasser oder Öl dargestellt werden . Das Heizmedium strömt durch Kanale des Extrudermantels. Diese Kanäle lassen sich besonders günstig mit Hilfe eines zweischaligen Extrudermantels darstellen. Die notwendigen Ausnehmungen können sehr gut in die Schaien eingearbeitet werden, solange die Schalen getrennt sind.

In der Kühlzone (ohne intensive Mischung) wird die Schmelze vorzugsweise auf 220 bis 110 Grad Celsius heruntergekühlt, PE auf etwa 110 Grad Celsius, PS auf etwa 120 bis 130 Grad Celsius und PP auf etwa 130 bis 160 Grad Celsius.
Zur Kühlung wird der Extrudermantel in entsprechender Anwendung der oben beschriebenen Beheizungstechnik mit Kühlmittel durchströmt.

Die oben erläutert unterschiedliche Ausbildung der Planetwalzenextruderabschnitte und nachfolgender bzw. vorausgehender Abschnitte kann grundsätzlich zur Optimierung der einzelnen Extruderabschnitte genutzt werden. Das schließt die Veränderung der Teilkreisdurchmesser der mit den Planetenspindeln zusammenwirkenden Innenverzahnung und/oder die Veränderung der Planetenspindelzahl und/oder eine unterschiedliche Anordnung der Planetenspindeln auf dem Teilkreisdurchmesser der Innenverzahnung und/oder eine Längenänderung und/oder eine Änderung der Spindelsteigung und/oder eine Änderung der Verzahnung ein.
Derartige Veränderungen stehen im Gegensatz zu der allgemeinen Entwicklungsrichtung. Allgemein besteht im Bereich der Planetenwalzenextruder das Bestreben, die Abschnitte gleich auszubilden. Unterschiedlichen Anforderungen wird durch Veränderung der Anzahl der hintereinander angeordneten Abschnitte und durch Verwendung anderer, aber sonst gleicher Typen Rechnung getragen. Die Unterscheidung der Typen erfolgt nach dem Durchmesser. Z.B. gibt es 150iger, 200er, 250iger und 300er Extruderabschnitte.
Die erfindungsgemäße Abkehr von der allgemeinen Entwicklungsrichtung hat auch unabhängig von der Frage Bedeutung, ob eine Pumpe zwischen zwei Extruderabschnitte geschaltet wird.

Die Erfindung hat auch erkannt, daß es von Vorteil sein kann, daß Spiel zwischen den Zähnen der Planetwalzenextruder zu verändern. Im Bereich der Kühlzone fördert eine Vergrößerung des Spieles die Kühlung, in der Einzug- und Kompressionszone fördert ein minimales Spiel die Förderwirkung des Extruders.

Gleiche Wirkung haben in der Einzug- und Kompressionszone bei Verwendung von Einschneckenextruderabschnitten auch Nuten in dem die Schnecken umgebenden Zylinder. Die Nuten verlaufen nach der Erfindung in Längsrichtung oder spiralförmig in Förderrichtung. Dem liegt die Uberlegung zugrunde, daß die Kunststoffe in Granulatform aufgegeben werden Die Korner gelangen kalt in die Einfüllschnecke und werden von der Schnecke ohne wesentliche Lageänderung in Förderrichtung nach vorn bewegt. Das geschieht solange, bis die Granulatkörner in den beheizten Extruderbereich kommen und dort an den rauhen, erwärmten Zylinderflächen kleben. Dann beginnen die Granulatkörner zu rollen. Durch die Rollbewegung werden die mit der beheizten Zylinderfläche in Berührung stehenden Granulatkörnerflächen gewechselt. Die Granulatkörner werden allseitig erwärmt, so daß die Aufschmelzung der Granulatkörner beginnt. In üblichen Einschneckenextrudern baut sich damit erst ein Druck auf Vor diesem Bereich entsteht kein Druck, weil die polierte Schneckenfläche keine Reibung mit den Granulatkörnern entfaltet.

Durch die erfindungsgemäßen Nuten in den Zylinderflächen verkeilen sich die Granulatkörner zwischen den Zähnen der Schnecke und den Nuten des Zylinders. Die Granulatkörner werden in Förderrichtung zwangsweise bewegt. Der damit verbundene Druckaufbau verkürzt die notwendige Baulänge für die Einfüll- bzw. Einzugszone und die Kompressionszone. Die Nuten erstrecken sich mindestens über eine Länge von 1 D, wobei D der Teilkreisdurchmesser der Schnecke ist. Besser ist eine Länge von 3 bis 4 D.
Günstig ist dabei eine eingängige Einzugschnecke.
Auch die vorstehend beschriebene Gestaltung des Spieles bzw. die Nuten im Zylinder sind unabhängig von den anderen, oben beschriebenen Merkmalen anwendbar und von Vorteil.

In weiterer Ausbildung der Erfindung können die Planetenspindeln verschiedener Zonen bzw. Abschnitte eine gegenläufige Steigung besitzen. Damit heben sich die von den gegenläufigen Abschnitten ausgehenden Kräfte weitgehend gegenseitig auf. Das erleichtert die Bauweise des Extruders ganz erheblich. Vorzugsweise besitzen zwei benachbarte Planetwalzenabschnitte mit gegenläufigen Planetenspindeln einen gemeinsamen Anlaufring.
Nach der Erfindung führt die gegenläufige Steigung nicht zu einer Unterbrechung der Förderung. Nach der Erfindung wird der in Förderrichtung der Schmelze hintere gegenläufig fördernde Planetwalzenextruderabschnitt überfahren. Das heißt, die Förderkraft des gegen die allgemeine Förderrichtung des Extruders fördernden Extruderabschnitts ist nach der Erfindung deutlich kleiner als die Kraft der anströmenden Schmelze. Zugleich hat dieser Planetwaizenextruderabschnitt aufgrund seiner Auslegung eine ausreichende Durchströmungsöffnung für die Schmelze in der allgemeinen Förderrichtung. Der erfindungsgemäß gegen die allgemeine Förderrichtung arbeitende Extruderabschnitt bewirkt eine extreme Durchmischung der Schmelze und in der Kühlzone eine extreme Kühlwirkung. Auch das ist unabhängig davon anwendbar, ob die verschiedenen Extruderabschnitte durch eine Pumpe miteinander verbunden sind. Vorteilhafterweise kann der gegenläufig fördernde Planetwalzenextruderabschnitt dabei auch mit einem anderen Extruderabschnitt anderer Bauart, z.B.einem Einschneckenabschnitt oder Doppelschneckenabschnitt überfahren werden

Der notwendige Förderdruck zum Überfahren des gegenläufig arbeitenden Planetwalzenextruderabschnittes kann durch den in Förderrichtung arbeitenden Planetwalzenextruderabschnitt oder durch die hier vorzugsweise vorgesehene Pumpe zwischen beiden Extruderabschnitten bewirkt werden.

Bei Verwendung eines einstufigen Extruders mit Planetwalzenextruderabschnitten für die Verweil-, Misch- und Kühlzone und für die Plastifizier- und Mischzone ist vorzugsweise die Plastifizier- und Mischzone gegenläufig fördernd.
Bei zwei gegenläufig fördernden Planetwalzenextruderabschnitten können die Planetenspindeln beider Abschnitte gegen einen gemeinsamen Anlaufring laufen. Auch das ist unabhängig von der Verbindung der Extruderabschnitte über eine Pumpe anwendbar.

Weitere bauliche Vorteile ergeben sich in an sich bekannter Weise durch eine gemeinsame Zentralspindel/Schaft für verschiedene Extruderabschnitte.

Zur Absperrung der Extruderzonen/abschnitte sind auf der Zentralspindel vorzugsweise Blister vorgesehen. Dabei handelt es sich jeweils um einen beliebig geformten Bund, der die Zylinderbohrung, die an dieser Stelle unverzahnt ist, bis auf ein Spiel vollständig ausfüllt. Das Spiel kann so gewählt sein, daß keine Schmelze an dem Blister vorbeiströmt, oder das Spiel ist so gewählt, daß ein dünner Schmelzestrom über den Blister strömt. Das heißt, der Blister sperrt die Extruderabschnitte ganz oder teilweise ab.

Bei der Herstellung von Kunststoffschaum findet die Treibmittelzuführung vorzugsweise in der Plastifizier- und Mischzone bzw. in der Verweil-, Misch- und Kühlzone statt. Sofern der jeweiligen Zone ein Blister vorgeschaltet ist, ergeben sich günstige Verhältnisse, wenn der Treibmitteleintrag nach dem Blister stattfindet. Damit wendet sich die Erfindung auch in diesem Punkt von einer Entwicklungsrichtung bei Planetwalzenextrudern ab, nach der die Eindosierung von Hilfsmitteln usw. am Anlaufring zwischen den Extruderabschnitten stattfindet.

Für die Anwendung auf die Polystyrolextrusion kann ein Einspritzdruck von 40 bis 50 bar in den Planetwalzenextruderabschnitt ausreichend sein.
Vorteilhafterweise kann die erfindungsgemäße Eindosierung von Treibmitteln auch unabhängig davon angewendet werden, ob eine Pumpe zwischen zwei Extruderabschnitten vorgesehen ist.

Wahlweise sind die Planetwalzenextruderabschnitte in den weiteren Zonen mit einem Einschneckenextruder in der Einzug- oder Einfüllzone kombiniert. Dabei kann die Schnecke des Einschneckenextruderabschnittes zugleich die Zentralspindel für einen nachfolgenden Planetwalzenextruderabschnitt bilden oder umgekehrt die Zentralspindel zugleich die Schnecke bildet.
Im Falle der Verwendung eines Doppelschneckenextruderabschnittes für die Einzug- oder Füllzone kann eine der Schnecken zugleich mit der Zentralspindel verbunden sein wie die Schnecke des Einschneckenextruderabschnittes. Diese Schnecke des Doppelschneckenextruderabschnittes kann länger als die zweite Schnecke sein oder so versetzt gegenüber der zweiten Schnecke sein, daß sie gegenüber der zweiten Schnecke in Förderrichtung vorragt und die bauliche Gestaltung erleichtert.
Auch das kann für andere Extruder unabhängig davon vorteilhaft sein, ob eine Pumpe zwischen zwei Extruderabschnitten Verwendung findet.

Vorzugsweise ist der Einzugschnecke bzw. Füllschnecke noch eine Dichtschnecke vorgeordnet. Vorgeordnet heißt dabei: eintrittsseitige Anordnung.
Die Dichtschnecke hat wahlweise eine Länge von 1 bis 3 D, wobei D wiederum der Teilkreisdurchmesser der Dichtschnecke ist. Die Dichtschnecke ist zweckmäßigerweise Teil der Zentralspindel des nachfolgenden Planetwalzenextruderabschnittes und umgekehrt. Es ist günstig, die Dichtschnecke eingängig auszubilden. Dann ist die Dichtwirkung relativ zur Schneckenlänge am größten.
Die Dichtschnecke kann an dem Ende, welches dem Planetwalzenextruderabschnitt abgewandt ist, mit einer Stopfbüchse und Deckel abgedichtet werden. Für die Stopfbüchse ist vorzugsweise eine Grafit-Teflonpackung vorgesehen, die eine Schnur mit rechteckigem bzw. quadratischem Querschnitt besitzt. Außerdem ist der Bereich des Schneckenschaftes ohne Profilausbildung (glatt) in der Oberfläche für die Packung von Vorteil.

Bei der Montage kann es von Vorteil sein, wenn der äußere Radius der Bewegungsbahn der umlaufenden Planetenspindeln eines Planetwalzenextruderabschnittes in Durchlaufrichtung der Schmelze kleiner als der äußere Radius der Bewegungsbahn der Planetenspindeln des nachfolgenden Planetwalzenextruderabschnittes ist. Die Planetenspindeln lassen sich dann leichter montieren. Ausreichend ist dafür eine geringe Abweichung. Die Abweichung kann auch bis 20% betragen.

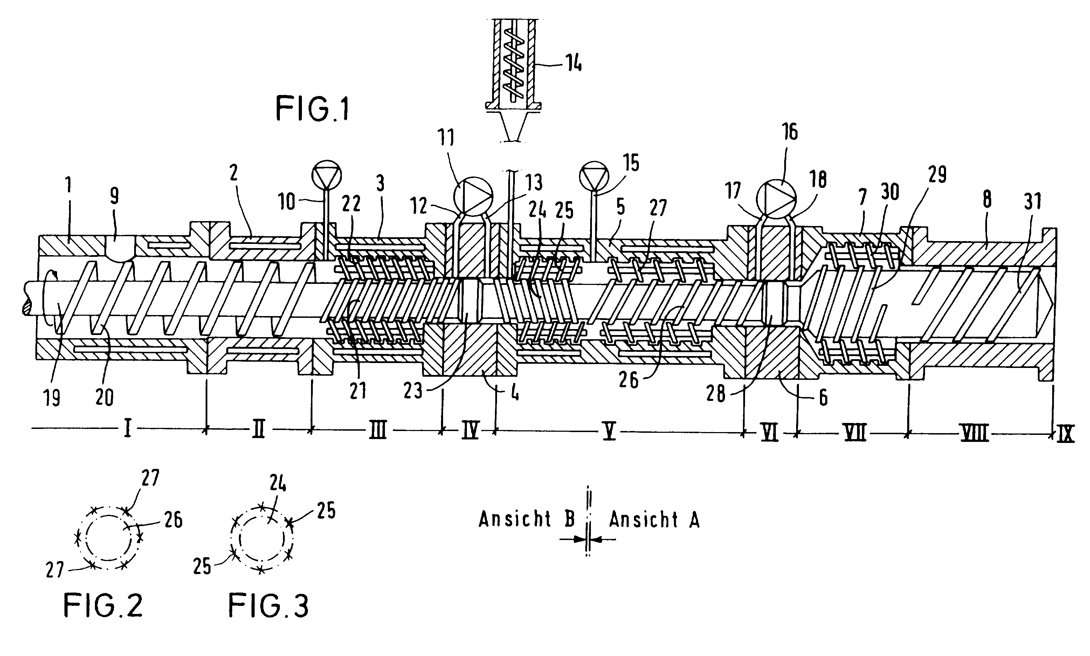

In der Zeichnung ist ein Ausführungsbeispiel der Erfindung dargestellt. Fig. 1 zeigt einen Extruder mit verschiedenen Gehäuseabschnitten 1, 2, 3, 4, 5, 6, 7 und 8. Jeder Gehäuseabschnitt entspricht einem Extruderabschnitt. Der Gehäuseabschnitt 1 gehört zu einer Einzugzone 1, der Gehäuseabschnitt 2 zu einer Aufschmelzzone II, der Gehäuseabschnitt 3 zu einer Plastifizier- und Mischzone III, der Gehäuseabschnitt 4 zu einer Absperrzone IV , der Gehäuseabschnitt 5 zu einer Verweil, Misch- und Kühlzone V, der Gehäuseabschnitt 6 zu einer Absperrzone VI, der Gehäuseabschnitt 7 zu einer Misch- und Kühlzone VII und der Gehäuseabschnitt 8 zu einer Austragzone VIII. Die Zonen III, V und VII sind als Planetwalzenextruderabschnitte ausgebildet, die Zonen 1 und 2 bilden eine Einzug- und Aufschmelzschnecke, die Zone 8 eine Austragsschnecke. Die Planetwalzenextruderabschnitte besitzen (verzahnte) Zentralspindeln 21, 24,26 und 29 und bilden mit den Schnecken 19 und 31 einen gemeinsamen Schaft(Zentralspindel). Ferner gehören zu den Planetwalzenextruderabschnitten Planetenspindeln 22,25,27 und 30. Die Planetenspindeln besitzen die gleiche Verzahnung wie die Zentralspindel und kämmen einerseits mit der Zentraispindel und andererseits mit einer Innenverzahnung des Extrudermantels.
Dementsprechend ist der Extrudermantel mit der gleichen Verzahnung wie die Planetenspindeln und die Zentralspindel versehen.
Der Teilkreisdurchmesser der Innenverzahnung im Gehäuse bzw. der eingesetzten Buchse ist üblicherweise das kennzeichnende Maß für Planetwalzenextruder bzw. deren Abschnitte.

Im Bereich der Einschneckenextruderteile 19 und 31 sind die zugehörigen Gehäuse an der Innenfläche glatt ausgebildet. Das Einschneckenextruderteil 31 besitzt eine viergängige Schnecke, das Einschneckenextruderteil 19 eine eingängige Schnecke. Das Einschneckenextruderteil 19 ist an dem Ende, welches den Planetwalzenextruderteilen abgewandt ist, zugleich als Dichtschnecke ausgebildet.

Die Rohstoffaufgabe erfolgt in Form von Kunststoffgranulat durch eine Einfüllöffnung 9. Nach dem Aufschmelzen des Kunststoffgranulats wird Treibgas bei 10 zudosiert. Insgesamt erfolgt die Treibgasdosierung in zwei Stufen. Die zweite Stufe ist mit 15 bezeichnet und liegt etwa mittig in der Verweil-, Misch- und Kühlzone und zwar im Abstand von einer weiteren Rohstoffzugabe über einen Bypass- und Seitenarmextruder 14.

Die Absperrzonen 4 und 6 zwischen den Planetwalzenextrudern bestehen aus Gehäuseringen und Blistern 23, 28. Bei den Blistern handelt es sich um einen Bund des gemeinsamen Schaftes. der die umgebenden Gehäuseringe so ausfüllt, daß keine nennenswerte Leckströmung auftritt. Unmittelbar vor jedem und nach jedem Bund sind Schmelzeleitungen 12 und 13 bzw. 17 und 18 vorgesehen, die zu Zahnradpumpen 11 und 16 führen. Vor der Pumpe 11 sitzt ein nicht dargestelltes Schmelzefilter mit einem Siebwechsler in der Schmelzeleitung. Das Schmelzefilter dient dazu, Feststoffpartikel aus der Schmelze herauszufiltern. Damit wird die Lebensdauer der Pumpe verlängert.

In den Schmelzeleitungen 12,13 und 17 und 18 finden sich nicht dargestellte Meßfühler für Druck und Temperatur. Die Meßwerte werden als Regelgrößen verwendet. Darüber hinaus wird die Temperatur der Heißmedien und der Kühlmedien gemessen. Entsprechende Meßfühler sind in den Zuleitungen angeordnet. Schließlich wird auch die Stromaufnahme des Extruders und der Pumpen und deren Drehzahl gemessen. Auch diese Meßgrößen dienen als Regelgrößen.

Mittels der Pumpen 11 und 16 kann der Schmelzestrom von der Plastifizier- und Mischzone in die Verweil-, Misch- und Kühlzone bzw. von der Verweil- Misch- und Kühlzone in die Misch- und Kühlzone in jeder gewünschten Weise geregelt werden.

Der Planetwalzenextruderabbereich der Verweil-, Misch und Kühlzone besteht aus zwei Abschnitten, die beide gegenläufig ausgebildet sind. Die Gegenläufigkeit hat die eingangs beschriebene Wirkung. Der in Strömungsrichtung der Schmelze vordere Abschnitt ist zugleich gegenläufig zu dem Planetwalzenextruderabschnitt der Plastifizier- und Mischzone. Dadurch heben sich die auf die Absperrzone IV wirkenden mechanischen Kräfte der Planetenspindeln in etwa auf. Im Prinzip kann der Gehäuseteil der Absperrzone als gemeinsamer Anlaufring der Planetenspindeln 25 und 22 angesehen werden. Im Ausführungsbeispiel sind die Anlaufringe aus Gründen der zeichnerischen Vereinfachung mit dem Gehäuse einstückig dargestellt. In der Praxis sind die Anlaufringe tatsächlich Ringe, die in das Gehäuse eingesetzt werden. Durch die Verwendung separater Ringe lassen sich die Planetenspindeln leicht montieren.

Die Fig. 2 und 3 zeigen, daß die Planetenspindeln 25 und 27 der zu der Verweil-, Misch- und Kühlzone gehörenden Extruderabschnitte versetzt zueinander angeordnet sind. Der Versatz beträgt im Ausführungsbeispiel 30 Grad. Die Fig. 2 ist eine schematische Schnittdarstellung aus der Sicht B und die Fig. 3 eine schematische Schnittdarstellung aus der Sicht A.

Die Planetenspindeln kämmen mit der Zentralspindel. Außerdem kämmen die Planetenspindeln mit einer Innenverzahnung der Extrudergehäuse 3,5 und 7. Jedes Gehäuse besitzt schematisch dargestellte Kanäle im Gehäusemantel, durch die Kühlmittel und im Bedarfsfall ein Heizmedium durchgeführt wird. Die Kanäle werden unter Verwendung eines zweischaligen Mantels gebildet. Währen der Innenmantel als Buchse außen glatt ausgebildet ist, befinden sich Ausnehmungen für die Kanäle in dem Außenmantel. Die Ausnehmungen sind eingefräst. Außen trägt der Außenmantel Anschlüsse für das Heizmedium bzw. Kühlmedium bzw. deren Leitungen.

Als Kühlmedium findet Wasser Verwendung, desgleichen als Heizmedium. Das Wasser wird zur Erlangung von Temperaturen über 100 Grad Celsius mit Überdruck beaufschlagt.

## Patentansprüche

1. Extruder, insbesondere zum Schaumextrudieren von Kunststoffen, auch zum Einmischen von Additiven und Treibmitteln, insbesondere unter Zuführung von höher- oder niedrigviskosen Polymeren über einen Seitenarmextruder, sowie Abkühlung auf Ausformtemperatur und Zuführung in ein formgebendes Werkzeug, wobei zwischen mindestens zwei Stufen oder Zonen eine Pumpe geschaltet ist,
**dadurch gekennzeichnet,**
daß mindestens eine der beiden durch die Pumpe (11,16) verbundenen Stufen/Zonen als Planetwalzenextruderabschnitt ausgebildet ist.

2. Extruder nach Anspruch 1, **gekennzeichnet durch** eine Aufteilung in
a. eine Plastifizier- bzw. Aufschmelz- und Mischzone (II, III)
b. eine Verweil-, Misch und Kühlzone (V)
c. eine Misch und Kühlzone (VII)
und die Verwendung eines Planetwalzenextrudersabschnittes für eine oder mehrere der Zonen.

3. Extruder nach Anspruch 2, **gekennzeichnet durch** eine
d.vorgeschaltete Einzugzone (I)
e.nachgeschaltete Austragzone (VIII)

4. Extruder nach Anspruch 3, **gekennzeichnet durch** die Verwendung eines weiteren Planetwalzenextruder für mindestens eine der Zonen.

5. Extruder nach einem der Ansprüche 1 bis 4, **gekennzeichnet durch** unterschiedliche Planetwalzenextruderabschnitte.

6. Extruder nach einem der Ansprüche 1 bis 4, **dadurch gekennzeichnet,** daß die Planetwalzenextruder unterschiedliche Teilkreisdurchmesser der mit den Planetenspindeln (22,25,27,30) zusammenwirkenden Innenverzahnung und/oder eine unterschiedliche Planetenspindelzahl und/oder eine unterschiedliche Anordnung der Planetenspindeln (22,25,27,30) auf dem Teilkreisdurchmesser der Innenverzahnung und/oder unterschiedliche Längen und/oder unterschiedliche Spindelsteigungen und/oder unterschiedliche Verzahnungen aufweisen.

7. Extruder nach Anspruch 6, **gekennzeichnet durch** ein größeres Spiel zwischen den Zähnen der Planetwalzenextruderteile in der Kühlzone.

8. Extruder nach einem der Ansprüche 1 bis 7, **gekennzeichnet durch** ein kleineres Spiel zwischen den Zähnen der Planetwalzenextruderteile in der Plastifizierzone.

9. Extruder nach einem der Ansprüche 1 bis 8, **dadurch gekennzeichnet**, daß die Planetenspindeln (25) mindestens einer Zone bzw. Abschnittes eine gegenläufige Steigung besitzen und der gegenläufig fördernde Abschnitt überfahren wird.

10. Extruder nach Anspruch 9, **dadurch gekennzeichnet**, daß der Überfahrungsdruck durch die in Förderrichtung vorderen Abschnitte und/oder durch eine zwischengeschaltete Pumpe aufgebracht wird.

11. Extruder nach einem der Ansprüche 1 bis 10, **dadurch gekennzeichnet**, daß vor der Pumpe ein Schmelzefilter im Schmelzestrom vorgeschaltet ist.

12. Extruder nach Anspruch 11, **gekennzeichnet durch** einen Filter mit Siebwechseler.

13. Extruder nach einem der Ansprüche 1 bis 12, **dadurch gekennzeichnet,** daß in einer einstufigen Ausführung der Planetwalzenabschnitt der Verweil-, Misch- und Kühlzone eine gegenläufige Steigung zu dem Abschnitt der Plastifizier- und Mischzone (22) besitzt.

14. Extruder nach einem der Ansprüch 9 bis 13, **gekennzeichnet durch** einen gemeinsamen Anlaufring der gegenläufigen Spindeln (22, 25).

15. Extruder nach Anspruch 14, **gekennzeichnet durch** eine gemeinsame Zentralspindel/Schaft für die verschiedenen Zonen.

16. Extruder nach einem oder mehreren der Ansprüche 1 bis 15, **dadurch gekennzeichnet,** daß die durch Pumpen (11,16) miteinander verbundenen Extruderzonen im übrigen ganz oder teilweise gegeneinander abgesperrt sind.

17. Extruder nach Anspruch 16, **gekennzeichnet durch** einen Blister (23,28) der Zentralspindel als Sperrorgan.

18. Extruder nach Anspruch 16 oder 17, **dadurch gekennzeichnet,** daß der Blister mit einem dünnen Schmelzestrom umgeben wird.

19. Extruder nach einem der Ansprüche 1 bis 18, **gekennzeichnet durch** die Kombination mit mindestens einem Einschneckenextruderabschnitt für die Einzug- und/oder Aufschmelzzone

20. Extruder nach Anspruch 19, **dadurch gekennzeichnet,** daß die Schnecke des Einschneckenextruderabschnitts zugleich die Zentralspindel des Planetwalzenextruderabschnitts in nachfolgenden Zonen bildet und umgekehrt.

21. Extruder nach einem der Ansprüche 1 bis 18, **gekennzeichnet durch** einen Doppelschneckenextruderabschnitt für die Einzug- und/oder Aufschmelzzone.

22. Extruder nach Anspruch 21, **dadurch gekennzeichnet**, daß eine Schnecke des Doppelschneckenextruderabschnitts zugleich die Zentralspindel des Planetwalzenextruderabschnitts in nachfolgenden Zonen bildet und umgekehrt.

23. Extruder nach Anspruch 22, **dadurch gekennzeichnet**, daß die mit der Zentralspindel des Planetwalzenextruderabschnitts verbundene Schnecke des Doppelschneckenextruderabschnitts langer als die andere Schnecke des Doppelschneckenextruderabschnitts ist und/oder gegenüber der anderen Schnecke des Doppelschneckenextruderabschnitts versetzt ist, so daß sie gegenüber der anderen Schnecke des Doppelschneckenextruderabschnitts in Richtung des Planetwalzenextruderabschnitts vorragt.

24. Extruder nach einem der Ansprüche 1 bis 23, **dadurch gekennzeichnet,** daß bei Verwendung eines Einschneckenextruderabschnitts für die Einzugzone bzw. Füllzone der zugehörige Zylinder in Längsrichtung und/oder spiralförmig in Förderrichtung genutet ist.

25. Extruder nach Anspruch 24, **dadurch gekennzeichnet**, daß die Nuten sich über eine axiale Länge des Extruders von mindestens 1 D erstrecken, wobei D der Teilkreisdurchmesser der Schnecke ist.

26. Extruder nach Anspruch 25, **gekennzeichnet durch** eine Länge von 3 bis 4 D beträgt.

27. Extruder nach einem der Ansprüche 1 bis 26, **gekennzeichnet durch** eine größere Gangtiefe der Schnecke in der Einfüllzone bzw. der Einzugzone.

28. Extruder nach einem oder mehreren der Ansprüche 1 bis 27, **gekennzeichnet durch** eine Treibgaszuführung (10, 15) in der Plastifizier- und Mischzone und/oder in der Verweil-, Misch- und Kühlzone.

29. Extruder nach einem der Ansprüche 1 bis 28, **gekennzeichnet durch** eine Treibgaszuführung nach einem Blister.

30. Extruder nach Anspruch 28 oder 29, **gekennzeichnet durch** einen Einspritzdruck von 40 bis 50 bar in der Anwendung auf die Polystyrolextrusion.

31. Extruder nach einem oder mehreren der Ansprüche 1 bis 30, **dadurch gekennzeichnet**, daß die weitere Polymerzuführung (14) zwischen der Plastifizier- und Mischzone und der Verweil-, Misch- und Kühlzone erfolgt.

32. Extruder nach einem oder mehreren der Ansprüche 1 bis 31, **dadurch gekennzeichnet**, daß die Pumpen (11,16) als Zahnradpumpen ausgebildet sind.

33. Extruder nach einem oder mehreren der Ansprüche 1 bis 32, **gekennzeichnet durch** eine reduzierte Fördenwirkung des Planetwalzenextruders und eine Einstellung der Verweilzeit im Extruder mit Hilfe der Pumpe (11,16).

34. Extruder nach einem der Ansprüche 1 bis 33, **dadurch gekennzeichnet**, daß die Planetenspindeln (25,27) des einen Abschnittes zum anderen Abschnitt versetzt angeordnet sind.

35. Extruder nach einem oder mehreren der Ansprüche 1 bis 34, **gekennzeichnet durch** einen größeren Durchmesser in der Misch- und Kühlzone (VII) vor dem Austragende.

36. Extruder nach einem oder mehrern der Ansprüchen 1 bis 35, **gekennzeichnet durch** eine Veranderung des Schneckendurchmessers in der Austragzone (VIII) zur Beruhigung der Schmelze.

37. Extrucer nach Anspruch 36, **gekennzeichnet durch** eine Durchmesservergrößerung in der Austragzone (VIII).

38. Extruder nach einem der Ansprüche 1 bis 37, **gekennzeichnet durch** einen Igelkopfam austrittseitigen Ende der Zentralspindel (31).

39. Extruder nach Anspruch 38, **gekennzeichnet durch** eine Länge des Igelkopfes von 0,5 bis 1,5 D. wobei D der Teilkreisdurchmesser der Igel ist.

40. Extruder nach einem der Ansprüche 1 bis 39, **gekennzeichnet durch** ein Schlafrohr in der Austrittszone.

41. Extruder nach einem der Ansprüche 35 bis 40, **dadurch gekennzeichnet,** daß die Austragzone eine Länge von 1 bis 5 D aufweist, wobei D der Außendurchmesser der Zentralspindel/Schnecke in der Austragzone ist.

42. Extruder nach einem der Ansprüche 1 bis 41, **gekennzeichnet durch** eine eintrittsseitige Dichtschnecke.

43. Extruder nach Anspruch 42, **dadurch gekennzeichnet,** daß die Dichtschnecke Teil der Zentralspindel ist.

44. Extruder nach Anspruch 42 oder 43, **dadurch gekennzeichnet**, daß die Länge der Dichtschnecke 1 bis 3 D ist, wobei D der Teilkreisdurchmesser der Dichtschnecke ist.

45. Extruder nach einem der Ansprüche 1 bis 44, **gekennzeichnet durch** eine eingängige Einzugschnecke.

46. Extruder nach Anspruch 42 bis 45, **gekennzeichnet durch** eine Stopfbuchse mit Deckel an der Dichtschnecke, wobei die Dichtschnecke im Bereich der Stopfbuchse einen glatten Schaft aufweist und eine Grafit-Teflonpackung in der Stopfbuchse Anwendung findet.

47. Extruder nach Anspruch 46, **dadurch gekennzeichnet**, daß die Packung aus einer Schnur mit rechteckigem bzw. quadratischem Querschnitt besteht.

48. Extruder nach einem der Ansprüche 1 bis 47, **dadurch gekennzeichnet**, daß der äußere Radius der Bewegungsbahn der umlaufenden Planetenspindeln eines Extruderabschnittes in Durchlaufrichtung der Schmelze durch den Extruder kleiner als der äußere Radius der Bewegungsbahn der Planetenspindeln des nachfolgenden Extruderabschnittes ist.

49. Extruder nach Anspruch 48, **dadurch gekennzeichnet,** daß die Planetenspindeln der einzelnen Abschnitte sich im Teilkreisdurchmesser bis zu 20% voneinander unterscheiden.

50. Extruder nach einem der Ansprüche 1 bis 49, **gekennzeichnet durch** eine Schmelzetemperatur in der Mischzone von 170 bis 240 Grad Celsius.

51. Extruder nach Anspruch 50, **gekennzeichnet durch** eine Temperatur von etwa 200 Grad Celsius für die Verarbeitung von Polystyrol, von etwa 140 Grad Celsius für Polyethylen und etwa 240 Grad Celsius für Polypropylen.

52. Extruder nach einem der Anspruch 1 bis 51, **gekennzeichnet durch** eine Schmelzetemperatur in der Kühlzone von 220 bis 110 Grad Celsius.

53. Extruder nach einem der Ansprüche 1 bis 52, **gekennzeichnet durch** eine mehrgängige Schnecke in der Austragzone.

54. Extruder nach Anspruch 53, **gekennzeichnet durch** eine 4gängige Schnecke.

55. Extruder nach einem der Ansprüche 1 bis 54, **gekennzeichnet durch** die Zumischung von weiteren Polymeren und/oder Additiven und/oder Treibmitteln in der Verweil-, Misch- und Kühlzone.

## Claims

1. Extruder, in particular for foam extrusion of plastics, also for incorporating additives and blowing agents, in particular with introduction of higher or low viscosity polymers via a side arm extruder, and cooling to moulding temperature and introduction into a shape-giving mould, wherein a pump is connected between at least two stages or zones, characterised in that at least one of the two stages/zones connected by the pump (11, 16) is designed as a planetary roller extruder section.

2. Extruder according to claim 1, characterised by a division into
a. a plastifying or melting and mixing zone (II, III)
b. a holding, mixing and cooling zone (V)
c. a mixing and cooling zone (VII)
and the use of a planetary roller extruder section for one or more of the zones.

3. Extruder according to claim 2, characterised by a
d. feed zone (I) connected upstream
e. discharge zone (VIII) connected downstream

4. Extruder according to claim 3, characterised by the use of a further planetary roller extruder for at least one of the zones.

5. Extruder according to one of claims 1 to 4, characterised by different planetary roller extruder sections.

6. Extruder according to one of claims 1 to 4, characterised in that the planetary roller extruders have different reference diameters of the internal gearing cooperating with the planetary spindles (22, 25, 27, 30) and/or a different planetary spindle number and/or a different arrangement of the planetary spindles (22, 25, 27, 30) on the reference diameter of the internal gearing and/or different lengths and/or different spindle pitches and/or different gearing.

7. Extruder according to claim 6, characterised by a greater clearance between the teeth of the planetary roller extruder parts in the cooling zone.

8. Extruder according to one of claims 1 to 7, characterised by a smaller clearance between the teeth of the planetary roller extruder parts in the plastifying zone.

9. Extruder according to one of claims 1 to 8, characterised in that the planetary spindles (25) of at least one zone or section have an opposing pitch and the section conveying in the opposite direction is overridden.

10. Extruder according to claim 9, characterised in that the overriding pressure is applied by the front sections in the conveying direction and/or by a series-connected pump.

11. Extruder according to one of claims 1 to 10, characterised in that a melt filter is connected upstream in the melt stream in front of the pump.

12. Extruder according to claim 11, characterised by a filter with screen changer.

13. Extruder according to one of claims 1 to 12, characterised in that in a one-stage design, the planetary roller section of the holding, mixing and cooling zone has an opposing pitch to the section of the plastifying and mixing zone (22).

14. Extruder according, to one of claims 9 to 13, characterised by a common thrust ring for the opposing spindles (22, 25).

15. Extruder according to claim 14, characterised by a common central spindle/shaft for the different zones.

16. Extruder according to one or more of claims 1 to 15, characterised in that the extruder zones connected to one another by pumps (11, 16) are moreover completely or partly blocked with respect to one another.

17. Extruder according to claim 16, characterised by a blister (23, 28) of the central spindle as blocking element.

18. Extruder according to claim 16 or 17, characterised in that the blister is surrounded by a thin melt stream.

19. Extruder according to one of claims 1 to 18, characterised by the combination having at least one single-screw extruder section for the feed and/or melting zone.

20. Extruder according to claim 19, characterised in that the screw of the single-screw extruder section at the same time forms the central spindle of the planetary roller extruder section in subsequent zones and vice versa.

21. Extruder according to one of claims 1 to 18, characterised by a double-screw extruder section for the feed and/or melting zone.

22. Extruder according to claim 21, characterised in that a screw of the double-screw extruder section at the same time forms the central spindle of the planetary roller extruder section in subsequent zones and vice versa.

23. Extruder according to claim 22, characterised in that the screw of the double-screw extruder section connected to the central spindle of the planetary roller extruder section is longer than the other screw of the double-screw extruder section and/or is offset with respect to the other screw of the double-screw extruder section, so that it projects in the direction of the planetary roller extruder section with respect to the other screw of the double-screw extruder section.

24. Extruder according to one of claims 1 to 23, characterised in that when using a single-screw extruder section for the feed zone or filling zone, the associated cylinder is grooved in the longitudinal direction and/or spirally in the conveying direction.

25. Extruder according to claim 24, characterised in that the grooves extend over an axial length of the extruder by at least 1 D, wherein D is the reference diameter of the screw.

26. Extruder according to claim 25, characterised by a length of 3 to 4 D.

27. Extruder according to one of claims 1 to 26, characterised by a greater thread depth of the screw in the filling zone or the feed zone.

28. Extruder according to one or more of claims 1 to 27, characterised by a blowing agent supply (10, 15) in the plastifying and mixing zone and/or in the holding, mixing and cooling zone.

29. Extruder according to one of claims 1 to 28, characterised by a blowing agent supply after a blister.

30. Extruder according to claim 28 or 29, characterised by an injection pressure of 40 to 50 bar when used for polystyrene extrusion.

31. Extruder according to one or more of claims 1 to 30, characterised in that further polymer supply (14) takes place between the plastifying and mixing zone and the holding, mixing and cooling zone.

32. Extruder according to one or more of claims 1 to 31, characterised in that the pumps (11, 16) are designed as geared pumps.

33. Extruder according to one or more of claims 1 to 32, characterised by a reduced conveying effect for the planetary roller extruder and adjustment of the residence time in the extruder with the aid of the pump (11, 16).

34. Extruder according to one of claims 1 to 33, characterised in that the planetary spindles (25, 27) of one section are arranged to be offset to the other section.

35. Extruder according to one or more of claims 1 to 34, characterised by a greater diameter in the mixing and cooling zone (VII) in front of the discharge end.

36. Extruder according to one or more of claims 1 to 35, characterised by a change in the screw diameter in the discharge zone (VIII) to kill the melt.

37. Extruder according to claim 36, characterised by a diameter increase in the discharge zone (VIII).

38. Extruder according to one of claims 1 to 37, characterised by a knurled mixing section at the outlet-side end of the central spindle (31).

39. Extruder according to claim 38, characterised by a length for the knurled mixing section of 0.5 to 1.5 D, wherein D is the reference diameter of the porcupine mixer.

40. Extruder according to one of claims 1 to 39, characterised by a limp pipe in the outlet zone.

41. Extruder according to one of claims 35 to 40, characterised in that the discharge zone has a length of 1 to 5 D, wherein D is the external diameter of the central spindle/screw in the discharge zone.

42. Extruder according to one of claims 1 to 41, characterised by an inlet-side sealing screw.

43. Extruder according to claim 42, characterised in that the sealing screw is part of the central spindle.

44. Extruder according to claim 42 or 43, characterised in that the length of the sealing screw is 1 to 3 D, wherein D is the reference diameter of the sealing screw.

45. Extruder according to one of claims 1 to 44, characterised by a single-thread feed screw.

46. Extruder according to claim 42 to 45, characterised by a gland with cover on the sealing screw, wherein the sealing screw has a smooth shaft in the region of the gland and graphite-Teflon packing is used in the gland.

47. Extruder according to claim 46, characterised in that the packing comprises a cord with rectangular or square cross-section.

48. Extruder according to one of claims 1 to 47, characterised in that the external radius of the movement path of the revolving planetary spindles of an extruder section in the direction of passage of the melt through the extruder is smaller than the external radius of the movement path of the planetary spindles of the subsequent extruder section.

49. Extruder according to claim 48, characterised in that the planetary spindles of the individual sections differ from one another as regards reference diameter up to 20 %.

50. Extruder according to one of claims 1 to 49, characterised by a melt temperature in the mixing zone of 170 to 240 degrees Celsius.

51. Extruder according to claim 50, characterised by a temperature of about 200 degrees Celsius for processing polystyrene, about 140 degrees Celsius for polyethylene and about 240 degrees Celsius for polypropylene.

52. Extruder according to one of claims 1 to 51, characterised by a melt temperature in the cooling zone of 220 to 110 degrees Celsius.

53. Extruder according to one of claims 1 to 52, characterised by a multiple-thread screw in the discharge zone.

54. Extruder according to claim 53, characterised by a 4-threaded screw.

55. Extruder according to one of claims 1 to 54, characterised by admixing further polymers and/or additives and/or blowing agents in the holding, mixing and cooling zone.

## Revendications

1. Extrudeuse, notamment pour extruder des matières synthétiques en mousse, et introduire également dans la matière des additifs et des agents d'expansion, notamment pour fournir des polymères très visqueux et faiblement visqueux par une extrudeuse de bras latéral, et pour refroidir la température de sortie de moule et l'alimentation à un outil de mise en forme, et entre au moins deux niveaux ou zones, il y a une pompe,
caractérisée en ce qu'
au moins l'une des deux zones reliées par la pompe (11, 16) est un segment d'extrudeuse à cylindre planétaire.

2. Extrudeuse selon la revendication 1,
caractérisée par
une répartition en,
a) une zone de plastification ou de fusion et de mélange II, III,
b) une zone de séjour de mélange et de refroidissement V,
c) une zone de mélange et de refroidissement VII,
et par l'utilisation d'un segment d'extrudeuse à cylindre planétaire pour une ou plusieurs des zones.

3. Extrudeuse selon la revendication 2,
caractérisée par
d) une zone d'entrée I en amont,
e) une zone de sortie VIII en aval.

4. Extrudeuse selon la revendication 3,
caractérisée par
l'utilisation d'une autre extrudeuse à cylindre planétaire pour au moins l'une des zones.

5. Extrudeuse selon l'une des revendications 1 à 4,
caractérisée par
des segments d'extrudeuse à cylindre planétaire différent.

6. Extrudeuse selon l'une des revendications 1 à 4,
caractérisée en ce que
l'extrudeuse à cylindre planétaire présente des diamètres de cercle primitif différents pour la denture intérieure coopérant avec les broches planétaires (22, 25, 27, 30) et/ou un nombre de broches planétaires différent et/ou une disposition différente des broches planétaires (22, 25, 27, 30) sur le diamètre du cercle primitif de la denture intérieure et/ou des longueurs différentes et/ou des arbres de broches différents et/ou des dentures différentes.

7. Extrudeuse selon la revendication 6,
caractérisée par
un jeu plus grand entre les dents des parties d'extrudeuse à cylindre planétaire dans la zone de refroidissement.

8. Extrudeuse selon l'une des revendications 1 à 7,
caractérisée par
un jeu plus petit entre les dents des parties d'extrudeuse à cylindre planétaire dans la zone de plastification.

9. Extrudeuse selon l'une des revendications 1 à 8,
caractérisée en ce que
les broches planétaires (25) d'au moins une zone ou segment ont un pas opposé et passent sur le segment qui extrait en sens opposé.

10. Extrudeuse selon la revendication 9
caractérisée en ce que
la pression de passage est appliquée par les segments amont dans le sens de transfert et/ou par une pompe intermédiaire.

11. Extrudeuse selon l'une des revendications 1 à 10,
caractérisée par
un filtre à produit en fusion placé dans le passage des produits en fusion en amont de la pompe.

12. Extrudeuse selon la revendication 11,
caractérisée en ce que
le filtre est un filtre à tamis interchangeable.

13. Extrudeuse selon l'une des revendications 1 à 12,
caractérisée en ce que
dans une réalisation en un étage des segments de cylindre planétaire, la zone de séjour de mélange et de refroidissement possède un pas opposé aux segments de la zone de plastification et de mélange (22).

14. Extrudeuse selon l'une des revendications 9 à 13,
caractérisée par
une bague d'entrée commune pour les broches à sens opposé (22, 25).

15. Extrudeuse selon la revendication 14,
caractérisée par
un corps/broche centrale commune pour les différentes zones.

16. Extrudeuse selon l'une des revendications 1 à 15,
caractérisée en ce que
les zones d'extrudeuse reliées par les pompes (11, 16) sont par ailleurs totalement ou partiellement coupées les unes des autres.

17. Extrudeuse selon la revendication 16,
caractérisée par
une partie gonflée (23, 28) de la broche centrale qui constitue un organe d'arrêt.

18. Extrudeuse selon l'une des revendications 16 à 17,
caractérisée en ce que
la partie gonflée est entourée par un mince filet de produit en fusion.

19. Extrudeuse selon l'une des revendications 1 à 18,
caractérisée par
la combinaison avec au moins un segment d'extrudeuse à vis unique pour la zone d'entrée et/ou de fusion.

20. Extrudeuse selon la revendication 19,
caractérisée en ce que
la vis du segment d'extrudeuse à vis unique forme en même temps la broche centrale du segment d'extrudeuse à cylindre planétaire pour les zones en aval et inversement.

21. Extrudeuse selon l'une des revendications 1 à 18,
caractérisée par
un segment d'extrudeuse à double vis pour la zone d'entrée et/ou de fusion.

22. Extrudeuse selon la revendication 21,
caractérisée par
une vis du segment d'extrudeuse à double vis formant en même temps la broche centrale du segment d'extrudeuse à cylindre planétaire des zones en aval et inversement.

23. Extrudeuse selon la revendication 22,
caractérisée en ce que
la vis du segment d'extrudeuse à double vis reliée à la broche centrale du segment d'extrudeuse à cylindre planétaire est plus longue que l'autre vis du segment d'extrudeuse à double vis et/ou est décalée par rapport à l'autre vis du segment d'extrudeuse à double vis pour qu'elle dépasse de l'autre vis du segment d'extrudeuse à double vis, en direction du segment d'extrudeuse à cylindre planétaire.

24. Extrudeuse selon l'une des revendications 1 à 23,
caractérisée par
l'utilisation d'un segment d'extrudeuse à vis unique pour la zone d'entrée ou de remplissage du cylindre correspondant, qui présente des rainures dans la direction longitudinale et/ou en spirale dans la direction de transfert.

25. Extrudeuse selon la revendication 24,
caractérisée en ce que
les rainures s'étendent sur une longueur axiale de l'extrudeuse égale à au moins 1 D, D étant le diamètre du cercle primitif de la vis.

26. Extrudeuse selon la revendication 25
caractérisée en ce que
la longueur est comprise entre 3 et 4 D.

27. Extrudeuse selon l'une des revendications 1 à 26,
caractérisée par
un pas plus important de la vis dans la zone de remplissage ou dans la zone d'entrée.

28. Extrudeuse selon l'une des revendications 1 à 27,
caractérisée par
une alimentation en gaz propulseur (10, 15) dans la zone de plastification et de mélange et/ou dans la zone de séjour de mélange et de refroidissement.

29. Extrudeuse selon l'une des revendications 1 à 28,
caractérisée par
une alimentation en gaz propulseur en aval d'un gonflement.

30. Extrudeuse selon l'une des revendications 28 à 29,
caractérisée par
une pression d'injection de 40 à 50 bars pour l'application à l'extrusion de polystyrène.

31. Extrudeuse selon l'une des revendications 1 à 30,
caractérisée par
plusieurs alimentations de polymère (14) entre la zone de plastification et de mélange et la zone de séjour de mélange et de refroidissement.

32. Extrudeuse selon l'une des revendications 1 à 31,
caractérisée en ce que
les pompes (11, 16) sont des pompes à engrenages.

33. Extrudeuse selon l'une des revendications 1 à 32,
caractérisée par
un effet de transfert réduit de l'extrudeuse à cylindre planétaire et un réglage du temps de séjour dans l'extrudeuse à l'aide de la pompe (11, 16).

34. Extrudeuse selon l'une des revendications 1 à 33,
caractérisée en ce que
les broches planétaires (25, 27) d'un segment sont décalées par rapport à celles de l'autre segment.

35. Extrudeuse selon l'une des revendications 1 à 34,
caractérisée par
un plus grand diamètre de la zone de mélange et de refroidissement (VII) en amont de l'extrémité de sortie.

36. Extrudeuse selon l'une des revendications 1 à 35,
caractérisée par
une modification du diamètre de la vis dans la zone de sortie VIII pour calmer le produit en fusion.

37. Extrudeuse selon la revendication 36,
caractérisée par
une augmentation du diamètre dans la zone de sortie VIII.

38. Extrudeuse selon l'une des revendications 1 à 37,
caractérisée par
une tête d'hérisson à l'extrémité de sortie de la broche centrale (31).

39. Extrudeuse selon la revendication 38,
caractérisée par
une longueur de la tête d'hérisson comprise entre 0,5 et 1,5 D, D étant le diamètre du cercle primitif de la partie en hérisson.

40. Extrudeuse selon l'une des revendications 1 à 39,
caractérisée par
un tube souple dans la zone de sortie.

41. Extrudeuse selon l'une des revendications 35 à 40,
caractérisée en ce que
la zone de sortie a une longueur de 1 à 5 D, D étant le diamètre extérieur de la vis/broche centrale dans la zone de sortie.

42. Extrudeuse selon l'une des revendications 1 à 41,
caractérisée par
une vis de compression/étanchéité en entrée.

43. Extrudeuse selon la revendication 42,
caractérisée en ce que
la vis de compression fait partie de la broche centrale.

44. Extrudeuse selon les revendications 42 ou 43
caractérisée en ce que
la longueur de la vis de compression est égale à 1/3 D, D étant le diamètre du cercle primitif de la vis de compression.

45. Extrudeuse selon l'une des revendications 1 à 44,
caractérisée par
une vis d'entrée à un filet.

46. Extrudeuse selon les revendications 42 à 45,
caractérisée par
un manchon d'arrêt avec un couvercle sur la vis de compression, celle-ci ayant un corps lisse dans la zone du manchon d'arrêt et une garniture en téflon-graphite pour le manchon d'arrêt.

47. Extrudeuse selon la revendication 46,
caractérisée en ce que
la garniture est formée d'un cordon de section rectangulaire ou carrée.

48. Extrudeuse selon l'une des revendications 1 à 47,
caractérisée en ce que
le rayon extérieur de la trajectoire des broches planétaires périphériques d'un segment d'extrudeuse dans le sens de passage du produit en fusion à travers l'extrudeuse est inférieur au rayon extérieur de la trajectoire des broches planétaires du segment d'extrudeuse en aval.

49. Extrudeuse selon la revendication 48,
caractérisée en ce que
les broches planétaires des différents segments diffèrent de diamètre de cercle primitif d'une différence allant jusqu'à 20 %.

50. Extrudeuse selon l'une des revendications 1 à 49,
caractérisée par
une température de fusion dans la zone de mélange comprise entre 170 et 240°C.

51. Extrudeuse selon la revendication 50,
caractérisée par
une température d'environ 200°C pour le traitement du polystyrène, environ 140°C pour le polyéthylène et d'environ 240°C pour le polypropylène.

52. Extrudeuse selon l'une des revendications 1 à 51,
caractérisée par
une température de fusion de 200°C à 110°C dans la zone de refroidissement.

53. Extrudeuse selon l'une des revendications 1 à 52,
caractérisée par
une vis à plusieurs filets dans la zone de sortie.

54. Extrudeuse selon la revendication 53,
caractérisée par
une vis à quatre filets.

55. Extrudeuse selon l'une des revendications 1 à 54,
caractérisée par
l'adjonction d'autres polymères et/ou d'additifs et/ou d'agents d'expansion dans la zone de séjour de mélange et de refroidissement.
